# EUROPÄISCHE PATENTSCHRIFT

(11) **EP 2 557 338 B1**
(45) Veröffentlichungstag und Bekanntmachung des Hinweises auf die Patenterteilung: **31.08.2016**
(21) Anmeldenummer: 12174424.7
(22) Anmeldetag: 29.06.2012
(51) Int. Cl.: F16J 15/00, F16J 15/32

(54) **Bürstendichtung**
Brush seal
Joint à brosses

(30) Priorität: 11.08.2011 DE 102011080834
(43) Veröffentlichungstag der Anmeldung: 13.02.2013
(73) Patentinhaber: Siemens Aktiengesellschaft, 80333 München (DE)
(72) Erfinder: Hofmann, Andreas, 91091 Grossenseebach (DE)

(56) Entgegenhaltungen:
- EP-A1- 1 813 840
- US-A- 5 106 104
- US-A- 5 181 728
- US-A1- 2004 036 227
- US-A1- 2005 196 267

## Beschreibung

Die Erfindung betrifft eine Bürstendichtung zum Abdichten eines Spaltes zwischen einer drehenden Welle und einem Gehäuse nach dem Oberbegriff des unabhängigen Patentanspruchs 1. Des Weiteren betrifft die Erfindung eine Turbine, insbesondere eine Dampfturbine mit einer Bürstendichtung entsprechend Patentanspruch 4.

Bürstendichtungen sind berührungslose Dichtelemente, die zur Abdichtung zwischen drehenden Wellen und stehende Gehäusen verwendet werden. Die Bürstendichtung weist in der Regel mehrere in Reihe geschaltete Dichtelemente auf. Eine solche Dichtungsanordnung ist beispielsweise aus der EP 1 813 840 A1 bekannt. Da die Bürsten der einzelnen Dichtelemente von der Welle beabstandet sind, können sie den Spalt zwischen der Welle und dem Gehäuse nicht vollständig abdichten, so dass immer ein verlustbehafteter Leckage-Strom an den einzelnen Dichtelementen zu einem Druckabfall an jeder Bürste führt. Physikalisch bedingt verteilt sich der Druckabfall nicht gleichmäßig auf die einzelnen Dichtelemente der Bürstendichtung. Am, in Strömungsrichtung, ersten Dichtelement, kommt es nur zu einem relativ kleinen Druckabfall, während das in Strömungsrichtung letzte Element den größten Druckabfall bewältigen muss.

Bei sehr großen Druckdifferenzen zwischen dem Innen- und Außenraum kann die Druckdifferenz am letzten Dichtelement dabei so groß werden, dass dies überlastet und schließlich zerstört wird. Nacheinander fallen auch dann alle übrigen Dichtelemente aus. Für große Druckdifferenzen sind die Bürstendichtungen daher ungeeignet. Bei der Verwendung von Bürstendichtungen in Industriedampfturbinen beschränkt sich die Anwendung somit ebenfalls nur auf wenige Fälle.

Um eine Zerstörung des Dichtelementes zu vermeiden werden verschiedene Maßnahmen getroffen. Die DE 37 41 020 A1 sieht beispielsweise eine Entlastungsleitung vor, durch die ein definierter Druck aus dem Raum hinter dem Dichtelement abgeführt werden kann, so dass die Druckdifferenz zwischen dem Raum vor und dem Raum hinter dem Dichtelement einen zulässigen Wert nicht überschreitet. Nachteilig an einer solchen Lösung ist jedoch, dass über die Abführleitung ein Leckagestrom entsteht, der verloren geht.

Aus der nicht vorveröffentlichten deutschen Patentanmeldung DE 10 2009 012 748 ist eine Bürstendichtung zur Abdichtung eines Spaltes zwischen einer drehenden Welle und einem Gehäuse mit wenigstens zwei in Reihe geschalteten Dichtelementen bekannt, bei dem wenigstens ein Dichtelement, wenigstens einen Bypass aufweist, welcher die Räume vor unter hinter dem jeweiligen Dichtelement verbindet. Durch den Bypass wird ein Druckausgleich zwischen dem Raum vor und hinter dem einzelnen Dichtelement erreicht, wodurch die Belastung des einzelnen Dichtelementes reduziert wird. Nachteilig an einer Bürstendichtung mit Bypass ist jedoch die sehr aufwendige und damit teure Fertigung der Bürstendichtung.

Die EP 1 813 840 A1 sieht vor, die Länge der Borsten der einzelnen Borstepakete unterschiedlich auszubilden, so dass zwischen dem jeweiligen Dichtelement und der Welle ein Dichtspalt mit unterschiedlicher Spaltweite ausgebildet wird. Durch die Ausbildung von Dichtspalten unterschiedlicher Spaltweiten kann der Druckabbau über die einzelnen hintereinander angeordneten Bürsten definierter ausgeführt werden. Nachteilig an einer Bürstendichtung mit Dichtelementen, bei denen die Borstenpakete unterschiedliche Längen aufweisen, ist jedoch der komplizierte und aufwendige Aufbau einer solchen Bürstendichtung. Eine ähnliche Lösung schlägt die US 2004/036227 A1 vor.

Die US 5 106 104 A offenbart ebenfalls eine Dichtungsanordnung, bei der unterschiedliche Spaltweiten zwischen den jeweiligen Dichtelementen und der Welle vorgesehen sind. Die unterschiedlichen Spaltweiten werden durch Platten hinter den jeweiligen Dichtelementen erzielt, wobei die Platten unterschiedliche radiale Innendurchmesser aufweisen und an einem Außengehäuse befestigt sind.

Die US 5 181 728 A offenbart eine Dichtungsanordnung mit mehreren Dichtelementen die ebenfalls Borstenpakete mit unterschiedlicher Borstenlänge aufweisen, wobei die Welle im Bereich des jeweiligen Dichtelementes unterschiedliche Wellendurchmesser aufweist. Die Spaltweiten sind dabei jeweils gleich ausgebildet.

Aufgabe der vorliegenden Erfindung ist es daher, ausgehend vom zuvor beschriebenen Stand der Technik, eine Bürstendichtung auszubilden, welche einfach aufgebaut ist, welche einen Leckagestrom vermeidet und ohne Bypass, einer Zerstörung durch Überlastung wirkungsvoll begegnet. Weiterhin ist es Aufgabe der vorliegenden Erfindung, eine Turbine, insbesondere eine Dampfturbine mit einer solchen Bürstendichtung bereitzustellen.

Die Aufgabe wird hinsichtlich der Bürstendichtung durch die Merkmale des unabhängigen Patentanspruchs 1 gelöst. Hinsichtlich der Turbine wird die Aufgabe durch die Merkmale des Patentanspruchs 4 gelöst.

Vorteilhafte Ausgestaltungen und Weiterbildungen, welche einzeln oder in Kombination miteinander einsetzbar sind, sind Gegenstand der Unteransprüche.

Die erfindungsgemäße Bürstendichtung zur Abdichtung eines Spaltes zwischen einer Welle und einem Gehäuse mit wenigstens zwei in Reihe geschalteten Dichtelementen, wobei zwischen den jeweiligen Dichtelementen und der Welle ein Dichtspalt vorhanden ist und wobei die jeweilige Dichtspalte unterschiedliche Spaltenweien aufweisen, zeichnet sich dadurch aus, dass die unterschiedlichen Spaltweiten durch unterschiedliche Wellendurchmesser im Bereich des jeweiligen Dichtspaltes ausgebildet sind und alle Dichtelemente gleich aufgebaut sind. Durch die unterschiedliche Spaltweite bei den jeweiligen Dichtspalten kann der Druckabfall an den einzelnen Dichtelementen variiert werden. Je größer die Spaltweite ist, desto geringer ist der Druckabfall an den jeweiligen Dichtelementen und desto geringer ist die Belastung für das einzelne Dichtelement. Durch eine geeignete Wahl der einzelnen Dichtspalte an den jeweiligen Dichtelementen kann somit der Druckabfall an jedem Dichtelement engestellt werden. Dadurch dass die Spaltweite nicht durch eine Variation der Länger der Dichtelemente sondern durch eine Variation der Wellendurchmesser erreicht wird, können alle Dichtelemente so ausgebildet werden, dass die einzelnen Borsten der Dichtelemente alle dieselbe Länge aufweisen. Hierdurch vereinfacht sich der Aufbau der Bürstendichtung erheblich. Alle Dichtelemente sind dabei gleich aufgebaut. Dies führt zu einer deutlichen Preisreduktion der Bürstendichtung. Das Abstufen der Welle bereitet wenig Schwierigkeiten und die Durchmesser können beispielsweise durch ein Abdrehen sehr präzise hergestellt werden. Das Abdrehen der Welle ist preiswert und kann in wenigen Arbeitsschritten erfolgen.

Eine vorteilhafte Ausgestaltung der Erfindung sieht vor, dass die Spaltweite zwischen dem in Strömungsrichtung als ersten angeordneten Dichtelement und der Welle am kleinsten und zwischen dem in Strömungsrichtung als letzten angeordneten Dichtelement und der Welle am größten ist. Wie bereits in der Beschreibungseinleitung beschrieben, tritt der höchste Druckabfall am letzten Dichtelement auf und der geringste Druckabfall am ersten Dichtungselement. Dadurch, dass der Dichtspalt am ersten Dichtungselement kleiner ausgebildet wird als am letzten Dichtungselement, kann der Druckabfall über die einzelnen Dichtungselemente gleichmäßig erfolgen, so dass die Belastung für das letzte Dichtungselement abnimmt und so eine Zerstörung dieses Dichtungselementes aufgrund einer zu großen Druckbelastung dieses Dichtungselementes vermieden wird.

Eine besonders vorteilhafte Ausgestaltung der Erfindung sieht vor, dass die Spaltweiten zwischen den jeweiligen Dichtungselementen und der Welle derart ausgelegt sind, dass der Druckabfall an den einzelnen Dichtungselementen annähernd gleich groß ist. Hierdurch werden alle Dichtungselemente gleich stark belastet, so dass es zu keinem frühzeitigen Ausfall einzelner Dichtungselemente und damit nachfolgend zum Ausfall sämtlicher Dichtungselemente kommt. Aufgrund dieser speziellen Ausgestaltung der Bürstendichtung wird die Lebensdauer der Bürstendichtung deutlich erhöht und die Belastung der einzelnen Dichtungselemente der Bürstendichtung reduziert.

Die erfindungsgemäße Turbine, insbesondere Dampfturbine zeichnet sich dadurch aus, dass sie mit einer Bürstendichtung nach einem der zuvor beschriebenen Ansprüche ausgebildet wird. Durch die Verwendung einer erfindungsgemäßen Bürstendichtung kann die Bürstendichtung in nahezu allen Bereichen der Dampfturbine eingesetzt werden, was mit den bislang üblichen Bürstendichtungen nicht möglich war. Durch die Verwendung der erfindungsgemäßen Bürstendichtung ergibt sich somit eine Dampfturbine die wesentlich betriebssicherer ist als die bislang betriebenen Turbinen. Ein Ausfall von Bürstendichtung aufgrund einer Überlastung des letzten Dichtungselementes kann weitgehend ausgeschlossen werden. Dadurch, dass die Bürstendichtung auch für höhere Drücke eine eingesetzt werden kann, reduzieren sich die Kosten für die Dampfturbine insgesamt.

Ein Ausführungsbeispiel, sowie weitere Vorteile der Erfindung werden nachfolgend anhand der einzigen Figur erläutert. Die Figur zeigt dabei eine Detailansicht einer erfindungsgemäßen Bürstendichtung im Axialschnitt.

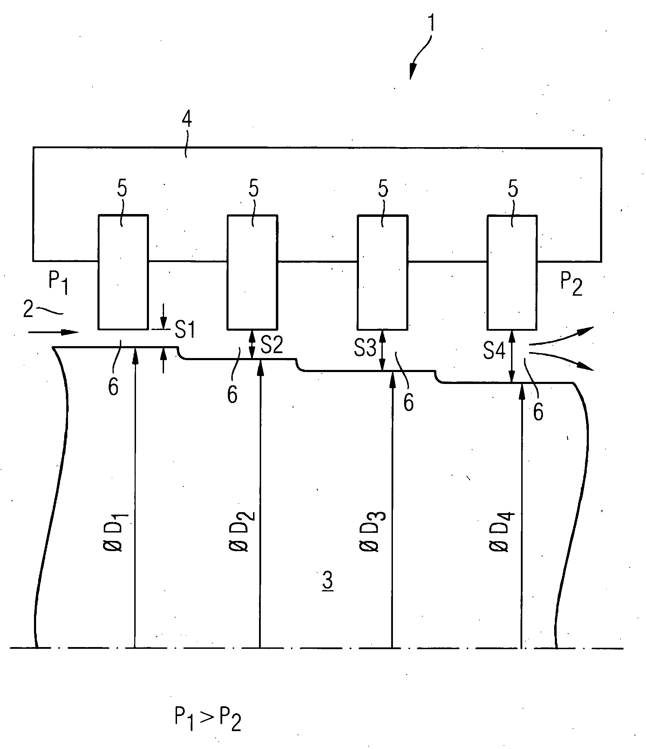

Figur 1 zeigt die Bürstendichtung dabei in einer stark vereinfachten Darstellung, bei der nur für die Erfindung wesentlichen Bauteile dargestellt sind.

Figur 1 zeigt eine Bürstendichtung 1 zur Abdichtung eines Spaltes 2 zwischen einer sich drehenden Welle 3 und einem Gehäuse 4. Bei der Welle 3 kann es sich beispielsweise um den Rotor einer Dampfturbine und bei dem Gehäuse, um das Gehäuse einer Dampfturbine handeln. Die Bürstendichtung 1 umfasst vier Dichtungselemente 5 die hintereinander in Reihe geschaltet sind. Die Dichtungselemente 5 bestehen aus Bürstenelementen und die einzelnen Dichtungselemente 5 sind hintereinander in Reihe geschaltet. Die einzelnen Dichtungselemente 5 sind von der Welle 3 beabstandet, wodurch sich zwischen den Dichtungselementen 5 und der Welle 3 jeweils ein Dichtspalt 6 ausbildet. Die Dichtspalte 6 weisen dabei unterschiedliche Spaltenweiten S1, S2, S3, S4 auf. Die Spaltenweite ist dabei ein Maß für die freie Durchströmfläche zwischen dem jeweiligem Dichtungselement 5 und der Welle 3.

Die Spaltweiten S1, S2, S3, S4 sind nicht gleich groß, sondern nehmen in Strömungsrichtung hin zu. Die Variation der Spaltweiten S1, S2, S3, S4 wird dadurch hergestellt, dass die zum jeweiligen Dichtungselement 5 zugehörigen Wellendurchmesser D1, D2, D3, D4 nicht gleich groß sind. Vielmehr nimmt der Wellendurchmesser in Strömungsrichtung stufenweise ab. Hierdurch nimmt die Spaltweite bei gleichbleibender Länge der Dichtungselemente 5 zu. Grundsätzlich wäre anstelle einer gestuften Welle 3 auch eine kontinuierliche Abnahme des Wellendurchmessers vom ursprünglichen Durchmesser D1 auf den Enddurchmesser D4 möglich.

Je geringer die Spaltweite ist, desto stärker ist der Druckabfall an dem jeweiligen Dichtungselement 5. Da physikalisch bedingt der Druckabfall am letzten Dichtungselement 5 einer Bürstendichtung 1 jeweils am größten ist, sind die Dichtspalte 6, an den jeweiligen Dichtungselemente 5 derart ausgewählt, dass sie diesem Effekt entgegenwirken, das heißt, dass die Spaltweite S1 des in Strömungsrichtung zuersten angeordneten Dichtungselements 5, am kleinsten ist und die Spaltweite an den jeweils nachfolgenden Dichtungselementen 5 jeweils größer werden. Die Spaltweiten S1, S2, S3, S4 der einzelnen Dichtungselemente 5 sind dabei derart ausgewählt, dass sich innerhalb der Bürstendichtung 1 ein gleichmäßiger Druckabfall über alle Dichtungselemente 5 ergibt. Hierdurch werden ein zu starker Druckabfall und dadurch eine unzulässig hohe Belastung des in Strömungsrichtung zuletzt angeordneten Dichtungselementes 5 wirkungsvoll vermieden.

Durch die Variation des Wellendurchmessers D1, D2, D3, D4 und die dadurch entstehende Variation der Dichtspalte S1, S2, S3, S4, bei gleich ausgebildeten Dichtungselementen 5, kann auf eine einfache Weise ein gleichmäßiger Druckabfall über den einzelnen Dichtungselementen 5 erzielt werden. Der Aufbau der Bürstendichtung 1 ist dabei besonders einfach und kostengünstig. Alle Dichtungselemente 5 können nämlich identisch ausgebildet werden. Durch den gleichmäßigen Druckabfall über allen Dichtungselementen 5 wird die Betriebssicherheit der Bürstendichtung 1, sowie die Lebensdauer gegenüber den bisher verwendeten Bürstensichtungen deutlich erhöht.

Die erfindungsgemäße Bürstendichtung eignet sich somit insbesondere zur Abdichtung zwischen einem Turbinengehäuse, insbesondere einem Dampfturbinengehäuse und dem sich drehenden Rotor. Durch die erfindungsgemäße Ausgestaltung der Bürstendichtung können die bislang bestehenden Einsatzgrenzen, insbesondere bei Turbinen, zu höheren Drücken verschoben werden, wodurch sich der Einsatzbereich der Bürstendichtungen erhöht.

## Patentansprüche

1. Bürstendichtungsanordnung (1) zur Abdichtung eines Spaltes (2) zwischen einer Welle (3) und einem Gehäuse (4), umfassend eine Welle sowie wenigstens zwei in Reihe geschaltete Bürstenelementen (5) wobei zwischen der jeweiligen Bürstenelement (5) und der Welle (3) ein Dichtspalt (6) vorhanden ist und wobei die jeweiligen Dichtspalte (6) unterschiedliche Spaltweiten (S1, S2, S3, S4) aufweisen, **dadurch gekennzeichnet, dass** die unterschiedlichen Spaltweiten (S1, S2, S3, S4) durch unterschiedliche Wellendurchmesser (D1, D2, D3, D4) im Bereich des jeweiligen Dichtspalts ausgebildet sind und wobei alle Bürstenelementen gleich aufgebaut sind.

2. Bürstendichtungsanordnung (1) nach Anspruch 1,
**dadurch gekennzeichnet, dass**
die Spaltweite (S1, S2, S3, S4) zwischen dem in Strömungsrichtung als ersten angeordneten Bürstenelement (5) und der Welle (3) am kleinsten und zwischen dem in Strömungsrichtung als letzten angeordneten Bürstenelement (5) und der Welle (3) am größten ist.

3. Bürstendichtungsanordnung (1) nach Anspruch 2,
**dadurch gekennzeichnet, dass**
die Spaltweiten (S1, S2, S3, S4) zwischen den jeweiligen Bürstenelementen (5) und der Welle (3) derart ausgelegt sind, dass der Druckabfall an den einzelnen Bürstenelementen (5) annähernd gleich groß ist.

4. Turbine, insbesondere Dampfturbine, mit einer Bürstendichtungsanordnung nach einem der Ansprüche 1 bis 3.

## Claims

1. Brush seal arrangement (1) for sealing a gap (2) between a shaft (3) and a housing (4), comprising a shaft and at least two brush elements (5) which are connected in series, there being a sealing gap (6) between the respective brush element (5) and the shaft (3), and the respective sealing gaps (6) having different gap widths (S1, S2, S3, S4), **characterized in that** the different gap widths (S1, S2, S3, S4) are formed by different shaft diameters (D1, D2, D3, D4) in the region of the respective sealing gap, and all brush elements being of identical construction.

2. Brush seal arrangement (1) according to Claim 1, **characterized in that** the gap width (S1, S2, S3, S4) is smallest between the brush element (5) which is arranged as first brush element in the flow direction and the shaft (3) and is greatest between the brush element (5) which is arranged as last brush element in the flow direction and the shaft (3).

3. Brush seal arrangement (1) according to Claim 2, **characterized in that** the gap widths (S1, S2, S3, S4) between the respective brush elements (5) and the shaft (3) are designed in such a way that the pressure drop at the individual brush elements (5) is of approximately identical magnitude.

4. Turbine, in particular steam turbine, having a brush seal arrangement according to one of Claims 1 to 3.

## Revendications

1. Agencement de joint à brosses (1) pour l'étanchéité d'un interstice (2) entre une onde (3) et un logement (4), comprenant une onde ainsi qu'au moins deux éléments à brosses (5) montés en série, dans lequel entre l'élément à brosses (5) respectif et l'onde (3) un interstice d'étanchéité (6) est présent, et dans lequel les interstices d'étanchéité (6) respectifs présentent différentes largeurs d'interstice (S1, S2, S3, S4), **caractérisé en ce que** les différentes largeurs d'interstice (S1, S2, S3, S4) sont configurées par le biais de différents diamètres d'onde (D1, D2, D3, D4) dans la zone de l'interstice d'étanchéité respectif, et dans lequel tous les éléments à brosses sont conçus sur le même modèle.

2. Agencement de joint à brosses (1) selon la revendication 1,
**caractérisé en ce que**
la largeur d'interstice (S1, S2, S3, S4) est la plus petite entre l'élément à brosses (5) disposé en premier dans la direction d'écoulement et l'onde (3) et est la plus grande entre l'élément à brosses (5) disposé en dernier dans la direction d'écoulement et l'onde (3).

3. Agencement de joint à brosses (1) selon la revendication 2,
**caractérisé en ce que**
les largeurs d'interstice (S1, S2, S3, S4) sont conçues entre les éléments à brosses (5) respectifs et l'onde (3) de telle sorte que la chute de pression au niveau des éléments à brosses (5) individuels a le même ordre de grandeur.

4. Turbine, en particulier turbine à vapeur, avec un agencement de joint à brosses selon l'une des revendications 1 à 3.
